# FASCICULE DE BREVET EUROPEEN

(11) **EP 0 973 410 B1**
(45) Date de publication et mention de la délivrance du brevet: **08.05.2002**
(21) Numéro de dépôt: 98910697.6
(22) Date de dépôt: 16.02.1998
(51) Int. Cl.: A23G 9/02

(54) **ARTICLE DE CONFISERIE GLACEE, PROCEDE APPAREIL ET MOULE POUR SA FABRICATION**
SPEISEEIS ARTIKEL, HERSTELLUNGS-VERFAHREN UND -VORRICHTUNG DAFÜR
ICED CONFECTIONERY PRODUCT, METHOD, APPARATUS AND MOULD FOR MAKING SAME

(30) Priorité: 04.03.1997 EP 97200625; 05.03.1997 EP 97200664
(43) Date de publication de la demande: 26.01.2000
(73) Titulaire: SOCIETE DES PRODUITS NESTLE S.A., 1800 Vevey (CH)
(72) Inventeur: RUANO DEL CAMPO, Miguel, E-98190 San Cugat del Valles (ES); DOMENECH SENDRA, Eduardo, E-46600 Alzira (ES)
(74) Mandataire: Archambault, Jean
(86) Numéro de dépôt international: EP9800907
(87) Numéro de publication internationale: WO9838872

(56) Documents cités:
- DE-C- 711 896
- FR-A- 653 870
- FR-A- 2 502 467
- FR-A- 2 535 581
- GB-A- 236 985
- US-A- 2 927 544
- US-A- 5 066 502

## Description

L'invention concerne un article de confiserie glacée, un procédé, un appareil et un moule pour la fabrication d'un tel article.

Les articles de confiserie glacée à consommer dits "d'impulsion" sont en général de manipulation et de consommation incommodes une fois leur emballage ouvert. Ils comportent généralement soit un bâtonnet par lequel ils sont tenus avec une seule main, dans le cas par exemple des sucettes glacées, soit un réceptacle qui sert également à les tenir d'une seule main, par exemple la gaufrette pour les cornets glacés. Dans tous les cas, il est difficile, par exemple pour un enfant de le déguster jusqu'à la fin sans qu'il ne coule ou ne se brise en morceaux.

Beaucoup de petits articles de confiserie glacée avec bâtonnet sont fabriqués par moulage dans des moules, généralement métalliques. Ces moules peuvent être constitués d'une ou plusieurs parties et, dans ce dernier cas, les différentes parties du moule doivent être écartées ou séparées lors du démoulage des articles.

Pour fabriquer des sucettes glacées présentant une ou plusieurs partie(s) convexe(s), par exemple avec des renflements de forme arrondie ou en relief et des parties rentrantes, il n'est pas possible d'utiliser des moules métalliques d'une seule pièce, puisque ces derniers ont une forme évasée avec une certaine dépouille dictée par la nécessité de démouler l'article une fois durci par un mouvement vertical de bas en haut. Par ailleurs, ces moules conduisent nécessairement à la réalisation d'une face supérieure plane imposée par le remplissage de la composition glacée liquide. De plus, pour démouler les articles de ces moules d'une seule pièce, il est nécessaire que la cavité du moule ne comporte pas de partie rentrante, sinon l'article ne serait pas démoulable.

Selon FR-A-2535581, on a résolu le problème de la fabrication d'articles de forme dite "indémoulable" au moyen de moules métalliques constitués de deux demi-coquilles profilées opposées articulées longitudinalement. Les demi-coquilles étant maintenues fermement l'une contre l'autre, on les remplit de composition glacée par une ouverture supérieure, par laquelle on insère un bâtonnet, on refroidit dans un tunnel de congélation à air froid, puis on réchauffe et enfin on ouvre les demi-coquilles pour libérer les articles moulés. Les demi-coquilles comportent un joint élastique le long de leur surface de contact mutuel assurant l'étanchéité de la cavité de moulage afin d'éviter toute fuite de composition liquide lors du remplissage et du durcissement.

Une autre méthode, décrite dans FR-A-2502467, consiste à utiliser des demi-coquilles profilées en ronde bosse dans leur partie interne mais sans relief à l'extérieur, demi-coquilles qui s'insèrent longitudinalement dans un moule maître en restant en contact avec celui-ci. Le moule maître contenant les demi-coquilles est refroidi dans un bac à liquide frigorigène (saumure ou eau glycolée), ce qui représente un avantage par rapport au refroidissement en tunnel, plus coûteux. Cependant, le démoulage des articles nécessite d'extraire verticalement les deux demi-coquilles du moule maître, puis de les écarter latéralement pour libérer l'article. Ces opérations impliquent la mise en oeuvre de dispositifs mécaniques d'extraction et de démoulage relativement complexes et encombrants.

On connaît de FR-A-653870 un article de confiserie glacée constitué d'un bloc congelé ayant la forme d'une figure géométrique, le dit article étant entouré d'un papier imperméable et comportant une tige servant de poignée à l'une de ses extrémités ou plusieurs tiges servant de poignées.

DE-A-711 896 concerne une sucette glacée de forme classique tronconique comportant un élément de préhension constitué d'une paille creuse cylindrique A, située sur l'axe de révolution de la sucette, et portant un disque coulissant transversal B de plus faible conductivité thermique, le dit disque servant de support à la base de la sucette. Après formation du corps de la sucette autour de la paille et sur le disque le tout est emballé dans une enveloppe isolante pour l'expédition et la consommation. La paille dépasse légèrement de l'extrémité de la sucette glacée constituant le sommet du tronc de cône.

US-A-5 066 502 a trait à une sucette de confiserie sucrée, du genre sucre candy dur, comportant un élément le traversant de part en part qui permet de tenir l'article par les deux bouts.

Le but de la présente invention est de fournir un article de confiserie glacée tridimensionnel d'un type nouveau de manipulation et de consommation facilitées et un procédé, un appareil et un moule pour le fabriquer.

L'article selon l'invention est composé d'un corps de confiserie glacée et d'un bâtonnet de préhension traversant le dit corps de part en part et est caractérisé par le fait que le corps est moulé dans un moule formée de deux demi-cavités et que le bâtonnet dépasse suffisamment des extrémités du dit corps pour que l'article puisse être consommé en étant tenu par les deux bouts du dit bâtonnet avec les deux mains.

Du fait que l'article peut être maintenu, notamment en position horizontale avec les deux mains, il y a beaucoup moins de risque que la confiserie glacée ne coule ou ne se détache du bâtonnet que dans le cas des articles connus.

Le procédé selon l'invention est caractérisé par le fait
que l'on forme un corps tridimentionnel de confiserie glacée par moulage dans un moule formée de deux demi-cavités autour d'un élément de préhension constitué d'un bâtonnet, de sorte que le bâtonnet dépasse suffisamment du dit corps pour que l'article puis être manipulé et consommé tout en étant tenu par les deux bouts, que l'on durcit et que l'on enveloppe l'article.

Selon un mode de réalisation du procédé, adapté à la fabrication des articles de glace à l'eau ou de sorbet, on place dans une cavité de moulage formée de deux demi cavités se faisant face maintenue sérrées l'une contre l'autre, un élément de préhension constitué d'un bâtonnet traversant la dite cavité de part en part, de sorte qu'il dépasse des deux extrémités de la dite cavité, qu'il soit maintenu en position axiale sensiblement au centre de la dite cavité et que la partie inférieure du dit bâtonnet soit placée dans un logement dans le prolongement axial de la dite cavité, le dit logement étant ajusté au dit bâtonnet avec un minimum de jeu, on introduit une composition pour confiserie glacée sous forme liquide par une ouverture supérieure dans la dite cavité, on refroidit et on congèle la dite composition, on réchauffe le moule, puis on démoule l'article.

De préférence, on refroidit le moule en le faisant cheminer dans un environnement de fluide de congélation, par exemple dans un tunnel d'air froid, entre le bâtonage et le réchauffage du moule en vue du démoulage.

Dans un mode de réalisation particulier conduisant à des produits composites, on fait suivre l'opération de remplissage de la composition glacée d'une étape d'aspiration de la composition encore liquide au centre de la cavité pour constituer une coquille, puis d'un second remplissage de l'espace libre par une seconde composition glacée. Ces opérations d'aspiration, puis de remplissage de l'espace libéré se font en dehors du tunnel d'air froid. Elles peuvent être répétées plusieurs fois, ce qui conduit à des produits stratifiés.

De telles compositions glacées peuvent contenir des inclusions sous forme de particules distinctes, de morceaux, par exemple de chocolat, praliné, caramel, fruits secs, gélifiés ou confits ou encore des inclusions, par exemple de sauce ou de sirop donnant un aspect marbré.

Une fois démoulés, les articles peuvent être enrobés, par exemple d'une couverture de chocolat et, le cas échéant de particules solides d'annexes, en prenant soin de limiter l'enrobage au corps de la confiserie glacée sans notablement projeter de couverture sur la partie des bâtonnets dépassant du corps, par exemple au moyen d'une enrobeuse en utilisant des rouleaux applicateurs combinés à une pulvérisation à basse pression.

Lorsqu'il s'agit de glace à l'eau ou de sorbet, les articles peuvent être recouverts d'une mince couche d'eau, par exemple par pulvérisation, ce qui leur confère un glaçage de surface protecteur, pouvant être également attractif.

Dans un autre mode de réalisation du moulage,
on crée par thermosoufflage en ligne une cavité entre deux feuilles thermoplastiques que l'on scelle et que l'on peut détacher l'une de l'autre par pelage, la dite cavité étant reliée à un canal de remplissage dans sa partie supérieure et prolongée axialement par un logement dans sa partie inférieure, le dit logement étant ajusté au dit bâtonnet avec le minimum de jeu et servant à guider le dit bâtonnet au moment de son insertion et à le maintenir en position lors du remplissage,
on place le bâtonnet dans son logement,
on introduit une composition pour confiserie glacée sous forme liquide par le dit canal de remplissage dans la dite cavité,
on refroidit et on congèle la dite composition.

Dans cette dernière variante, on peut démouler l'article par simple pelage de l'une des feuilles thermoplastiques. On peut également découper les feuilles autour de leur ligne de scellage, auquel cas les dites feuilles servent à la fois de moule et d'emballage des articles.

L'appareil selon l'invention est caractérisé par le fait qu'il comprend:
un ensemble de moulage constitué de deux demi-cavités complémentaires articulées longitudinalement et formant une cavité,
une barre de support de moules, solidaire d'une chaîne de transport sans fin, cheminant en même temps que la chaîne de transport sans fin et coopérant avec la dite chaîne pour maintenir les moules serrés les uns contre les autres pendant l'insertion du bâtonnet, pendant le remplissage de la cavité et pendant le durcissement de l'article sur le brin d'aller et sur la partie plane du brin de retour de la dite chaîne et écarter les moules les uns des autres à l'extraction, sur la partie incurvée remontante du brin de retour de la dite chaîne,
des moyens de refroidissement de l'ensemble de moulage,
des moyens d'insertion et de positionnement d'un bâtonnet dans la dite cavité,
des moyens de remplissage de composition glacée dans l'ensemble de moulage, des moyens de réchauffage des moules,
des moyens d'ouverture des demi-cavités pour démouler l'article,
un dispositif d'extraction diagonale des articles moulés et
une chaîne de transport sans fin pour l'évacuation des articles moulés.

Dans un mode de réalisation particulier, l'appareil comporte également des moyens d'aspiration de composition glacée encore liquide de manière à former une coquille et des moyens de remplissage d'autre composition glacée dans la coquille ainsi formée.

Dans un autre mode de réalisation, l'appareil comporte en sus des moyens d'enrobage ou de glaçage des articles démoulés.

L'invention concerne également un moule de fabrication d'un article de confiserie glacée, caractérisé par le fait
qu'il est constitué de deux demi-cavités articulées longitudinalement et formant une cavité de moulage,
qu'à la partie supérieure de la dite cavité une ouverture est ménagée pour l'insertion du bâtonnet et le remplissage de la composition glacée,
que la partie inférieure de la dite cavité est prolongée par un logement axial dans lequel le bâtonnet vient s'insérer avec un minimum de jeu et
que le bâtonnet est maintenu en position centrée par un élément résilient appuyant sur le dit bâtonnet dans le dit logement.

L'invention sera mieux comprise au moyen de la description détaillée ci-après faite en regard des dessins annexés illustrant des modes de réalisation du procédé et un mode de réalisation de l'appareil et du moule selon l'invention donnés à titre d'exemple. Aux figures, les mêmes chiffres désignent les mêmes éléments.

Dans les dessins:
La figure 1 est un schéma général de l'appareil montrant les différents postes de fabrication par moulage d'une sucette glacée tridimentionnelle,
la figure 2 illustre schématiquement les opérations de démoulage de l'article,
la figure 3 est une vue de face du moule de fabrication de l'article, en position complétement ouverte, avec l'article de confiserie glacée dans la cavité de moulage et la figure 4 est une illustration schématique d'une variante d'un article selon l'invention, vu de face.

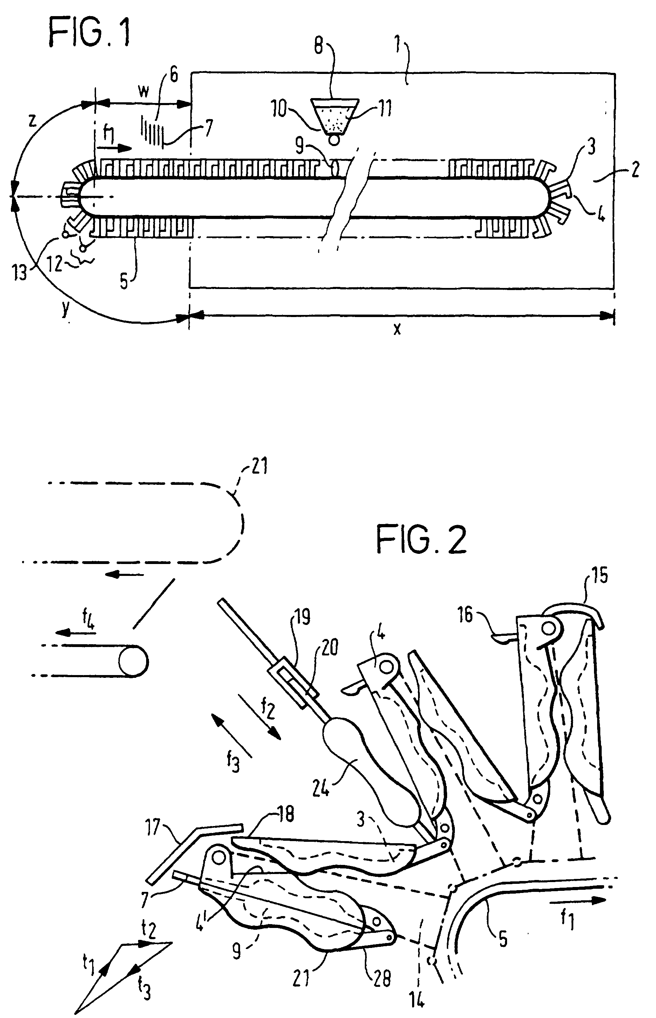

A la figure 1, l'appareil comprend une zone hors congélation et sans réchauffement W, une zone de congélation X, une zone de réchauffement superficiel Y et une zone de démoulage Z. La zone de congélation X est l'intérieur d'un tunnel 1 à air froid, par exemple à - 30° C à -32° C et si possible à température encore plus basse. On pourrait utiliser un tunnel à congélation rapide plus froid, avec par exemple une pulvérisation ou un ruissellement d'azote liquide sur les moules. Pour des raisons de simplification de la représentation, les distances indiquées pour les différentes zones W, X et Y ne correspondent pas aux distances réelles qui sont nécessaires aux transferts thermiques appropriés. De plus, certains éléments ne sont pas représentés pour des raisons de clarté: par exemple, on n'a représenté qu'un moule alors qu'en pratique on utilise des barres de support de rangées de moules. Ainsi, les moules sont articulées sur une chaîne transporteuse sans fin et constituent eux-même un convoyeur. De même, les barres de moules constituent les maillons d'une chaîne sans fin dont on n'a représenté qu'une partie. Dans la suite de l'exposé, on utilisera le terme "moule" pour désigner en fait une rangée de moules articulés sur une barre de moules.

Un moule 2, formé de deux demi-moules 3 et 4 articulés longitudinalement, chemine de gauche à droite suivant la flèche f1 dans la zone W par le mouvement de translation pas à pas de la chaîne sans fin 5, étant entendu qu'un pas est constitué par la distance entre deux moules consécutifs. Dans la zone W ainsi que dans les différentes parties droites de la chaîne dans les zones X et Y, les moules ainsi que les demi-moules qui les constituent sont maintenus serrés en contact les uns avec les autres par la chaîne 5. Des crochets et cliquets en matériau résilient (fig. 2) servent à la fois à solidariser les moules successifs entre eux dans leur partie supérieure et à maintenir chaque moule fermé dans les zones W, X et Y par encliquetage sur des épaulements correspondants du moule, et ceci de manière réversible, c'est à dire que les demi-moules peuvent être malgré tout facilement ouverts et les moules séparés par décliquetage.

Le moule 2 se présente au poste 6 où un bâtonnet 7 y est inséré, puis chemine alors dans la zone X où il est refroidi fortement, par exemple jusqu'à -3° C à -4° C avant son remplissage. Ce refroidissement préalable du moule permet, sous l'effet de la congélation rapide, la formation d'une enveloppe mince externe congelée qui fait office de joint et empêche toute fuite de matière liquide. Au poste 8, on remplit presque complètement la cavité 9 formée entre les deux demi-cavités du moule au moyen d'une doseuse non représentée, située à l'intérieur du tunnel depuis une trémie 10, qui elle est à l'extérieur du tunnel; avec une composition à glacer 11, par exemple une composition pour glace à l'eau au citron à environ 25 % de matière sèche contenant du saccharose, du sirop de glucose, un mélange d'épaississants, du concentré de citron et un arôme de citron, préalablement homogénéisée, pasteurisée, refroidie à environ 3-6° C et mûrie plusieurs h à cette température. La composition se solidifie sous l'effet du refroidissement, la durée de cheminement dans le tunnel 1 étant environ 35 à 45 min.

Sur le brin de retour de la chaîne 5, le moule 2 sort de la zone X pour passer dans la zone de réchauffement Y. En 12, le moule est réchauffé en surface depuis le bas par les buses 13 délivrant un fluide chaud, par exemple de la vapeur et/ou de l'air chaud ou de préférence des jets d'eau ou d'eau glycolée chaude, par exemple à température > 25° C (la fourniture de chaleur d'origine électrique, par exemple par rayonnement ou induction pourrait également remplir ce rôle), ce qui facilite le démoulage ultérieur de l'article.

Comme représenté à la figure 2, les moules s'écartent les uns des autres dans la zone de démoulage Z en même temps que les barres de moules 14 dans la partie incurvée remontante du brin de retour de la chaîne 5, en agissant contre le crochet 15 qui maintient les moules 2 ensemble. Les demi-moules 3, 4 étant toujours appliqués l'un contre l'autre par l'effet du cliquet 16, les moules sont ouverts en force par l'intermédiaire du levier 17 qui vient prendre sur une saillie 18 du demi-moule 3 qui dépasse du bord supérieur du moule. Le levier 17 est guidé selon un mouvement complexe triangulaire en trois temps (t₁, t₂ et t₃) par l'intermédiaire de vérins non représentés. Dans un premier temps, le levier 17 monte légérement en biais au dessus de la saillie 18, dans un second temps il se rapproche horizontalement du moule 2 et dans un troisième temps il redescend pratiquement verticalement en entraînant le demi-moule 3 vers le bas, jusqu'à ce que ce dernier bute contre le demi-moule suivant 4'. Simultanément, un dispositif de monte et baisse descend suivant la flèche f₂ et rapproche une pince 19 qui vient prendre l'extrémité du bâtonnet 20 et extraire l'article en le remontant suivant la flèche f₃ selon une trajectoire inclinée à environ 45°. Les opérations d'ouverture du moule 2 et d'extraction simultanée de l'article ont lieu pendant le temps d'arrêt de la chaîne. L'article un fois extrait est repris par une chaîne sans fin 21 qui le dirige de manière classique vers l'arrière pour le délivrer le cas échéant à un dispositif de pulvérisation pour lui appliquer un glaçage de surface, par exemple au moyen d'un bac utilisé ordinairement pour appliquer une couverture chocolatée, cette opération classique n'étant pas représentée. L'article, le cas échéant revêtu est ensuite déchargé et évacué suivant la flèche f₄ par la bande transporteuse 22 vers un dispositif d'emballage où elle est enveloppée, par exemple en "flow-pack", cette opération n'étant pas représentée.

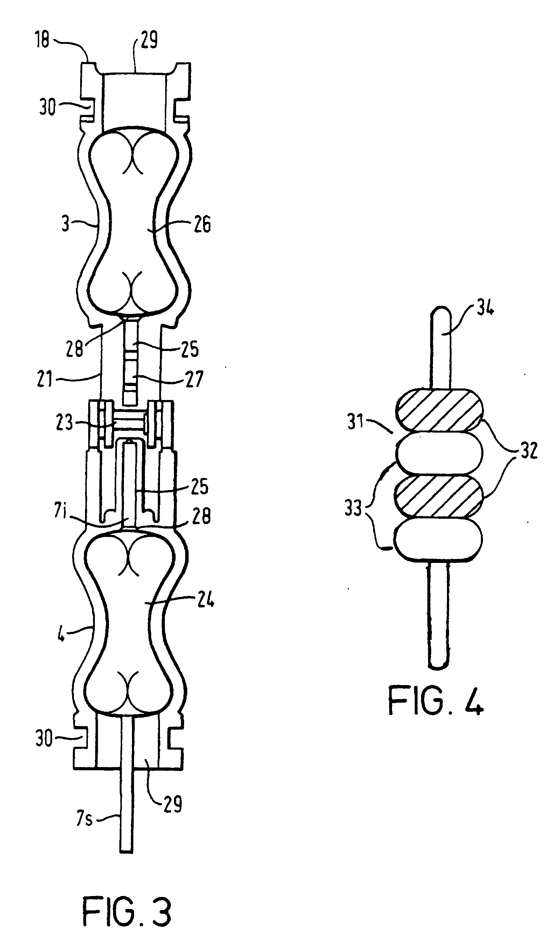

A la figure 3, le moule 2 est représenté complétement ouvert et avec l'article de confiserie glacée représentant un os disposé dans le demi-moule 4 uniquement pour des motifs de facilité de description. Le matériau du moule est l'aluminium de fonderie en parois épaisses et il n'est pas nécessaire qu'il soit anodisé ou téfloné. Le moule 2 comprend deux demi-moules 3 et 4 articulés longitudinalement autour de l'axe 23. Le bâtonnet 7, de section circulaire traverse le corps 24 de confiserie glacée de part en part et dépasse des extrémités de ce dernier, de sorte que la partie supérieure 7s du bâtonnet représente environ les 2/3 de sa partie inférieure 7i. La partie inférieure 7i du bâtonnet est logée exactement avec le minimum de jeu dans un espace cylindrique 25 ménagé dans les demi-moules 3 et 4. Lorsque les demi-cavités telles que 26 sont appliquées fermement l'une contre l'autre pour former la cavité 9 et que le bâtonnet 7 est mis en place dans le moule, le dit bâtonnet vient s'adapter dans l'espace 25, est maintenu en place sans glissement par la languette 27 faisant ressort et constitue alors un bouchon hermétique empêchant toute fuite de liquide dans le fond 28 en forme de tronc de cône inverse de la cavité 9. La composition à glacer liquide est introduite dans la cavité 9 par l'ouverture supérieure 29. Les échancrures 30 servent de passage au cliquet 16 de maintien des demi-moules 3 et 4 ensemble. En variante, l'article peut avoir un bâtonnet 7 de préhension plat, auquel cas le fond 28 a la forme d'un tronc de pyramide inverse à section rectangulaire.

A la figure 4, l'article 31 est fabriqué par moulage, en dosant successivement plusieurs compositions glacées de parfums et couleurs différents telles que 32, à l'orange et 33, au citron au moyen de plusieurs doseuses à partir de trémies successives situées à des endroits différents appropriés du tunnel 1, autour du bâtonnet 34.

Dans la description précédente, on a représenté un moule. Bien entendu, les explications restent valables dans le cas de rangées, par exemple de 4 à 12 moules sur une barre. On pourrait, sans sortir du cadre de l'invention, réaliser la fabrication des articles au moyen d'une machine à carrousel pourvue des différents postes décrits précédemment au lieu d'une machine linéaire.

## Revendications

1. Article de confiserie glacée tridimensionnel de manipulation et de consommation facilitées composé d'un corps de confiserie glacée et d'un bâtonnet de préhension traversant le dit corps de part en part, **caractérisé par le fait que** le corps est moulé dans un moule formé de deux demi-cavités et que le bâtonnet dépasse suffisamment des extrémités du dit corps pour que l'article puisse être consommé en étant tenu par les deux bouts du dit bâtonnet avec les deux mains.

2. Procédé de fabrication d'un article selon la revendication 1, **caractérisé par le fait**
**que** l'on forme un corps tridimensionnel de confiserie glacée par moulage dans un moule formé de deux demi-cavités autour d'un élément de préhension constitué d'un bâtonnet, de sorte que le bâtonnet dépasse suffisamment du dit corps pour que l'article puis être manipulé et consommé tout en étant tenu par les deux bouts, que l'on durcit et que l'on enveloppe l'article.

3. Procédé selon la revendication 2, adapté à la fabrication des articles de glace à l'eau ou de sorbet, **caractérisé par le fait que** l'on place dans une cavité de moulage formée de deux demi-cavités se faisant face maintenue serrées l'une contre l'autre, un élément de préhension constitué d'un bâtonnet traversant la dite cavité de part en part, de sorte qu'il dépasse des deux extrémités de la dite cavité, qu'il soit maintenu en position axiale sensiblement au centre de la dite cavité et que la partie inférieure du dit bâtonnet soit placée dans un logement dans le prolongement axial de la dite cavité, le dit logement étant ajusté au dit bâtonnet avec un minimum de jeu, que l'on introduit une composition pour confiserie glacée sous forme liquide par une ouverture supérieure dans la dite cavité, que l'on refroidit et que l'on congèle la dite composition, que l'on réchauffe le moule, puis que l'on démoule l'article.

4. Procédé selon la revendication 3, **caractérisé par le fait que** l'on refroidit le moule en le faisant cheminer dans un environnement de fluide de congélation, notamment dans un tunnel d'air froid, entre le bâtonage et le réchauffage du moule en vue du démoulage.

5. Procédé selon la revendication 3, conduisant à des produits composites, **caractérisé par le fait que** l'on fait suivre l'opération de remplissage de la composition glacée d'une étape d'aspiration de la composition encore liquide au centre de la cavité pour constituer une coquille, puis d'un second remplissage de l'espace libre par une seconde composition glacée, ces opérations d'aspiration, puis de remplissage de l'espace libéré se faisant en dehors du tunnel d'air froid et pouvant être répétées plusieurs fois, ce qui conduit à des produits stratifiés.

6. Procédé selon la revendication 3 ou 5, **caractérisé par le fait que** la ou les dites compositions) glacée(s) contient ou contiennent des inclusions sous forme de particules distinctes, de morceaux, notamment de chocolat, praliné, caramel, fruits secs, gélifiés ou confits ou encore des inclusions, notamment de sauce ou de sirop donnant un aspect marbré.

7. Procédé selon la revendication 3, **caractérisé par le fait qu'**une fois démoulés, l'on enrobe les articles, notamment d'une couverture de chocolat et, le cas échéant de particules solides d'annexes, en prenant soin de limiter l'enrobage au corps de la confiserie glacée sans notablement projeter de couverture sur la partie des bâtonnets dépassant du corps, notamment au moyen d'une enrobeuse en utilisant des rouleaux applicateurs combinés à une pulvérisation à basse pression.

8. Procédé selon la revendication 3, **caractérisé par le fait qu'**une fois démoulés, l'on recouvre les articles, lorsqu'il s'agit de glace à l'eau ou de sorbet, d'une mince couche d'eau, notamment par pulvérisation, ce qui leur confère un glaçage de surface protecteur, pouvant être également attractif.

9. Procédé selon la revendication 3, **caractérisé par le fait que** l'on crée par thermosoufflage en ligne une cavité entre deux feuilles thermoplastiques que l'on scelle et que l'on peut détacher l'une de l'autre par pelage, la dite cavité étant reliée à un canal de remplissage dans sa partie supérieure et prolongée axialement par un logement dans sa partie inférieure, le dit logement étant ajusté au dit bâtonnet avec le minimum de jeu et servant à guider le dit bâtonnet au moment de son insertion et à le maintenir en position lors du remplissage,
que l'on place le bâtonnet dans son logement,
que l'on introduit une composition pour confiserie glacée sous forme liquide par le dit canal de remplissage dans la dite cavité,
que l'on refroidit et que l'on congèle la dite composition.

10. Appareil de fabrication d'un article selon la revendication 1, **caractérisé par le fait**
**qu'**il comprend:
un ensemble de moulage constitué de deux demi-cavités complémentaires articulées longitudinalement et formant une cavité,
une barre de support de moules, solidaire d'une chaîne de transport sans fin, cheminant en même temps que la chaîne de transport sans fin et coopérant avec la dite chaîne pour maintenir les moules serrés les uns contre les autres pendant l'insertion du bâtonnet, pendant le remplissage de la cavité et pendant le durcissement de l'article sur le brin d'aller et sur la partie plane du brin de retour de la dite chaîne et écarter les moules les uns des autres à l'extraction, sur la partie incurvée remontante du brin de retour de la dite chaîne,
des moyens de refroidissement de l'ensemble de moulage,
des moyens d'insertion et de positionnement d'un bâtonnet dans la dite cavité,
des moyens de remplissage de composition glacée dans l'ensemble de moulage, des moyens de réchauffage des moules,
des moyens d'ouverture des demi-cavités pour démouler l'article,
un dispositif d'extraction diagonale des articles moulés et
une chaîne de transport sans fin pour l'évacuation des articles moulés.

11. Moule de fabrication d'un article de confiserie glacée selon la revendication 1, **caractérisé par le fait**
**qu'**il est constitué de deux demi-cavités articulées longitudinalement et formant une cavité de moulage,
**qu'**à la partie supérieure de la dite cavité une ouverture est ménagée pour l'insertion du bâtonnet et le remplissage de la composition glacée,
**que** la partie inférieure de la dite cavité est prolongée par un logement axial dans lequel le bâtonnet vient s'insérer avec un minimum de jeu et
**que** le bâtonnet est maintenu en position centrée par un élément résilient appuyant sur le dit bâtonnet dans le dit logement.

## Patentansprüche

1. Dreidimensionaler, leichter handhabbarer und verzehrbarer Eiskonfektartikel, der aus einem Eiskonfektkörper und einem diesen Körper ganz durchquerenden, einen Griff bildenden Stiel besteht, **dadurch gekennzeichnet, dass** der Körper in einer von zwei Hohlraumhälften gebildeten Form geformt wird und dass der Stiel an den Enden des Körpers so weit vorsteht, dass der Artikel verzehrt werden kann, indem er an den Enden des Stiels mit den Händen gehalten wird.

2. Verfahren zur Herstellung eines Artikels nach Anspruch 1, **dadurch gekennzeichnet,**
- **dass** man einen dreidimensionalen Eiskonfektkörper durch Formung in einer von zwei Hohlraumhälften gebildeten Form um ein aus einem Stiel bestehendes Griffelement herum so formt, dass der Stiel an dem Körper so weit vorsteht, dass der Artikel gehandhabt und verzehrt werden kann, indem er an den beiden Enden gehalten wird,
- **dass** man den Artikel härtet und überzieht.

3. Verfahren nach Anspruch 2, das für die Herstellung von Wassereis- und Sorbetartikeln ausgelegt ist, **dadurch gekennzeichnet, dass** man in einen Formungshohlraum, der von zwei einander gegenüberstehenden und aneinander angedrückt gehaltenen Hohlraumhälften gebildet wird, ein Griffelement, das aus einem den Hohlraum ganz durchquerenden Stiel besteht, so anordnet, dass es an den beiden Enden des Hohlraums vorsteht, dass es in axialer Lage im wesentlichen in der Mitte des Hohlraums gehalten wird und dass der untere Teil des Stiels in einer Aufnahme in der axialen Verlängerung des Hohlraums angeordnet ist, wobei diese Aufnahme mit einem Minimum an Spiel an den Stiel angepasst ist, dass man eine Eiskonfektzusammensetzung in flüssiger Form über eine obere Öffnung in den Hohlraum einführt, dass man die Zusammensetzung kühlt und tiefgefriert, dass man die Form erwärmt und dann den Artikel aus der Form nimmt.

4. Verfahren nach Anspruch 3, **dadurch gekennzeichnet, dass** man die Form kühlt, indem man sie zwischen der Stielanbringung und der Erwärmung der Form zum Zweck der Entnahme durch eine Kühlfluidumgebung, insbesondere durch einen Kaltlufttunnel, befördert.

5. Verfahren nach Anspruch 3 für die Herstellung von Verbundprodukten, **dadurch gekennzeichnet, dass** man auf den Arbeitsgang der Einfüllung der Eiszusammensetzung einen Schritt des Ansaugens der noch flüssigen Zusammensetzung an die Mitte des Holraums, um eine Schale zu bilden, und dann eine zweite Füllung des freien Raums mit einer zweiten Eiszusammensetzung folgen lässt, wobei diese Arbeitsgänge des Ansaugens und des Füllens des freien Raums außerhalb des Kaltlufttunnels vor sich gehen und mehrere Male wiederholt werden können, was zur Herstellung von Schichtprodukten führt.

6. Verfahren nach Anspruch 3 oder 5, **dadurch gekennzeichnet, dass** die Eiszusammensetzung/en Einschlüsse in Form von einzelnen Partikeln oder Stücken insbesondere aus Schokolade, Praliné, Karamel oder trockenen, gelierten oder kandierten Früchten oder Einschlüsse, insbesondere Saucen oder Sirups, die ein marmoriertes Aussehen ergeben, enthält/enthalten.

7. Verfahren nach Anspruch 3, **dadurch gekennzeichnet, dass** man die Artikel nach ihrer Entnahme aus der Form insbesondere mit einer Schokoladekuvertüre und ggf. mit festen zusätzlichen Teilchen umhüllt, indem man dafür sorgt, dass die Umhüllung auf den Körper des Eiskonfekts beschränkt bleibt, ohne dass Kuvertüre zu sehr auf den am Körper vorstehenden Teil der Stiele gelangt, und zwar insbesondere mit einer Umhüllungsvorrichtung unter Verwendung von mit einer Niederdruckzerstäubung kombinierten Auftragswalzen.

8. Verfahren nach Anspruch 3, **dadurch gekennzeichnet, dass** man die Artikel im Fall von Wassereis oder Sorbet nach ihre Entnahme aus der Form mit einer dünnen Wasserschicht insbesondere durch Aufstäubung bedeckt, was ihnen eine Oberflächenschutzglasur verleiht, die auch der Verzierung dienen kann.

9. Verfahren nach Anspruch 3, **dadurch gekennzeichnet, dass** man durch kontinuierliches Warmblasen zwischen zwei thermoplastischen Folien einen Hohlraum herstellt, die man siegelt und insbesondere durch Abziehen trennen kann, wobei dieser Hohlraum in seinem oberen Teil mit einem Füllkanal verbunden ist und unten durch eine Aufnahme axial verlängert wird, die mit einem Minimum an Spiel an den Stiel angepasst ist und zur Führung des Stiels bei seiner Einführung und zu seinem Halt bei der Füllung dient,
dass man den Stiel in die Aufnahme einführt,
dass man eine Eiskonfektzusammensetzung in flüssiger Form über den Füllkanal in den Hohlraum einführt,
dass man diese Zusammensetzung kühlt und tiefgefriert.

10. Vorrichtung zur Herstellung eines Artikels nach Anspruch 1, **dadurch gekennzeichnet, dass** sie folgendes aufweist:
- eine Formungseinheit, die aus zwei komplementären Hohlraumhälften besteht, die in Längsrichtung aneinander angelenkt sind und einen Hohlraum bilden,
- eine Tragstange für die Formen, die mit der endlosen Förderkette fest verbunden ist, sich gleichzeitig mit dieser bewegt und mit ihr zusammenwirkt, um die Formen während des Einsetzen des Stiels, während des Füllens des Hohlraums und während des Härtens des Artikels auf dem hinlaufenden Trum und auf dem ebenen Teil des zurücklaufenden Trums der Kette aneinandergedrückt zu halten und die Formen bei der Extraktion im gekrümmten aufsteigenden Teil des zurücklaufenden Trums der Kette voneinander zu entfernen,
- Mittel zum Kühlen aller Formen,
- Mittel zum Einsetzen und Positionieren eines Stiels in den bzw. in dem Hohlraum,
- Mittel zum Einfüllen von Eiszusammensetzung in alle Formen,
- Mittel zum Erwärmen der Formen,
- Mittel zum Öffnen der Hohlraumhälften zur Entnahme des Artikels,
- eine Vorrichtung zur diagonalen Extraktion der geformten Artikel und
- eine endlose Förderkette zur Abführung der geformten Artikel.

11. Vorrichtung zur Herstellung eines Eiskonfektartikels nach Anspruch 1, **dadurch gekennzeichnet,**
**dass** sie aus zwei Hohlraumhälften besteht, die in Längsrichtung aneinander angelenkt sind und einen Formungshohlraum bilden,
**dass** im oberen Teil des Hohlraums eine Öffnung zum Einsetzen des Stiels und zum Einfüllen der Eiszusammensetzung vorgesehen ist,
**dass** der untere Teil des Hohlraums durch eine axiale Aufnahme verlängert ist, in die der Stiel mit einem Minimum an Spiel eingesetzt wird, und
**dass** der Stiel durch ein elastisches Element, das auf den Stiel in der Aufnahme drückt, in zentrierter Stellung gehalten wird.

## Claims

1. Three-dimensional article of ice confectionery that is easy to manipulate and eat, composed of an ice confectionery body and a stick for holding it, passing right through the said body, **characterized in that** the body is moulded in a mould formed of two half-cavities and **in that** the stick projects sufficiently from the ends of the said body so that the article can be eaten while holding the two ends of the said stick in both hands.

2. Method for producing an article according to claim 1, **characterized in that** a three-dimensional body of ice confectionery is formed by moulding it in a mould formed of two half-cavities around a holding element consisting of a stick, so that the stick projects sufficiently from the said body to enable the article to be manipulated and eaten while holding it by both ends, **in that** it is hardened and **in that** the article is coated.

3. Method according to claim 2, adapted for the production of water ice or sorbet articles, **characterized in that** a holding element consisting of a stick is placed in a moulding cavity formed of two facing half-cavities held tightly against each other, so that it passes right through the said cavity and so that it projects from both ends of the said cavity, that it is held in a substantially axial position in the centre of the said cavity and that the lower part of the said stick is placed in a housing in the axial extension of the said cavity, the said housing being adjusted to the said stick with a minimum amount of play, that a composition for ice confectionery is introduced in liquid form through an upper opening in the said cavity, that the said composition is cooled and frozen, that the mould is heated and that the article is then removed from the mould.

4. Method according to claim 3, **characterized in that** the mould is cooled by causing it to pass through a freezing fluid environment, in particular through a cold air tunnel, between the insertion of the stick and the heating of the mould with a view to removal from the mould.

5. Method according to claim 3, leading to composite products, **characterized in that** the operation of filling the ice composition is followed by a step of sucking out the still liquid composition in the centre of the cavity so as to constitute a shell, followed by a second filling of the free space by a second ice composition, these operations of suction followed by filling the freed space being performed outside the cold air tunnel, it being possible to repeat these operations several times leading to layered products.

6. Method according to claim 3 or 5, **characterized in that** the said ice composition(s) contains or contain inclusions in the form of distinct particles and pieces in particular of chocolate, praline, caramel, dried, jellied or preserved fruits, or furthermore of inclusions in particular of sauce or syrup giving a mottled appearance.

7. Method according to claim 3, **characterized in that** once the articles are removed from the mould they are coated in particular with a covering of chocolate and optionally added solid particles, while taking care to limit the coating to the body of ice confectionery without splashing the covering to any appreciable extent onto the part of the sticks projecting from the body, in particular by means of a coating device using application rollers combined with a low pressure spray.

8. Method according to claim 3, **characterized in that** once the articles are removed from the mould they are covered, if they consist of a water ice or sorbet, with a thin layer of water, in particular by spraying, which gives them a protective surface glaze that may also be attractive.

9. Method according to claim 3, **characterized in that** a cavity is created in-line by hot blow-moulding between two thermoplastic sheets that are sealed and that may be detached from each other by peeling, the said cavity being connected to a filling channel in its upper part and being extended axially by a housing in its lower part, the said housing being adjusted to the said stick with a minimum amount of play and serving to guide the said stick at the moment of its insertion and to hold it in position during filling,
that the stick is placed in its housing,
that a composition for ice confectionery is introduced in liquid form through the said filling channel in the said cavity,
and that the said composition is cooled and frozen.

10. Apparatus for producing an article according to claim 1, **characterized in that** it comprises:
a moulding assembly consisting of two complementary half-cavities hinged longitudinally and forming a cavity,
a bar supporting the moulds, secured to an endless conveyer chain, proceeding at the same time as the endless conveyer chain and cooperating with the said chain so as to hold the moulds tightly against each other during insertion of the stick, during filling of the cavity and during hardening of the article on the forward run and on the flat part of the return run of the said chain, and so as to separate the moulds from each other on extraction, on the inwardly curving rising part of the return run of the said chain, means for cooling the moulding assembly,
means for inserting and positioning the stick in the said cavity,
means for filling the ice composition into the moulding assembly,
means for heating the moulds,
means for opening the half-cavities in order to remove the article from the mould,
a diagonal extraction device for the moulded articles and
an endless conveyer chain for removing the moulded articles.

11. Mould for producing an article of ice confectionery according to claim 1, **characterized in that**
it consists of two half-cavities hinged longitudinally and forming a moulding cavity,
an opening is provided in the upper part of the said cavity for inserting the stick and for filling the ice composition,
the lower part of the said cavity is extended by an axial housing in which the stick is inserted with a minimum amount of play and
the stick is held in a central position by a resilient element resting on the said stick in the said housing.
